# EUROPÄISCHE PATENTANMELDUNG

(11) **EP 1 821 528 A2**
(43) Veröffentlichungstag der Anmeldung: **22.08.2007**
(21) Anmeldenummer: 07450012.5
(22) Anmeldetag: 29.01.2007
(51) Int. Cl.: H04N 5/44

(54) **Fernseher**

(30) Priorität: 01.02.2006 AT 1452006
(71) Anmelder: OQ.tv Entwicklungs- und Produktionsgesellschaft mbH, 99610 Sömmerda (DE)
(72) Erfinder: Oberlehner, Hermann, 4020 Linz (AT); Bock, Volker, 99817 Eisenach (AT)
(74) Vertreter: Hübscher, Helmut

(57) **Zusammenfassung**

Es wird ein Fernsehgerät (1) mit einer von einem Gehäuse (2) umfaßten Anzeige (3), insbesondere LCD- oder Plasmaanzeige, die mit digitalen Bilddaten in einer für die Anzeige (3) spezifischen Auflösung ansteuerbar ist, mit einem mit der Anzeige (3) verbundenen Empfangsteil (11), insbesondere einem Sendetuner für Fernsehprogramme, mit einem von außerhalb des Gehäuses (2) zugänglichen digitalen Signaleingang (4), insbesondere einem HDMI tauglichen Signaleingang, zum Empfangen von digitalen Anzeigedaten, wobei der Signaleingang (4) und das Empfangsteil (11) über je einen digitalen Dateneingang (5, 14) einer Konvertierungsschaltung (6), insbesondere einem Scaler, mit der Anzeige (3) verbunden sind, welche Konvertierungsschaltung (6) in Abhängigkeit der Auflösung der an ihren Dateneingängen (5, 14) anliegenden Daten eine Anpassung der Auflösung dieser Daten an die spezifische Auflösung der Bilddaten der Anzeige (3) vornimmt, und mit einer im Gehäuse (2) angeordneten Recheneinheit (13) gezeigt, der eine digitalen Schnittstelle (12), insbesondere einem DVI Ausgang, zum Anzeigen von digitalen Anzeigedaten der Recheneinheit (13) zugeordnet ist. Um vorteilhafte Konstruktionsverhältnisse zu schaffen, wird vorgeschlagen, daß das von der Recheneinheit (13) programmgesteuerte Empfangsteil (11) über die digitale Schnittstelle (12) der Recheneinheit (13) mit dem digitalen Dateneingang der Konvertierungsschaltung verbunden ist, wobei die Konvertierungsschaltung (6) gegenüber der Recheneinheit (13) und dem über die digitale Schnittstelle (12) verbundenen Empfangsteil (11) auf einer gesonderten Baueinheit (7) im Gehäuse (2) vorgesehenen ist.

## Beschreibung

Die Erfindung betrifft ein Fernsehgerät mit einer von einem Gehäuse umfaßten Anzeige, insbesondere LCD- oder Plasmaanzeige, die mit digitalen Bilddaten in einer für die Anzeige spezifischen Auflösung ansteuerbar ist, mit einem mit der Anzeige verbundenen Empfangsteil, insbesondere einem Sendetuner für Fernsehprogramme, mit einem von außerhalb des Gehäuses zugänglichen digitalen Signaleingang, insbesondere einem HDMI tauglichen Signaleingang, zum Empfangen von digitalen Anzeigedaten, wobei der Signaleingang und das Empfangsteil über je einen digitalen Dateneingang einer Konvertierungsschaltung, insbesondere einem Scaler, mit der Anzeige verbunden sind, welche Konvertierungsschaltung in Abhängigkeit der Auflösung der an ihren Dateneingängen anliegenden Daten eine Anpassung der Auflösung dieser Daten an die spezifische Auflösung der Bilddaten der Anzeige vornimmt, und mit einer im Gehäuse angeordneten Recheneinheit, der eine digitalen Schnittstelle, insbesondere einem DVI Ausgang, zum Anzeigen von digitalen Anzeigedaten der Recheneinheit zugeordnet ist.

Um empfangene hochauflösende Anzeigedaten als Bilddaten auf einer Anzeige eines Fernsehgeräts darstellen zu können, ist es aus dem Stand der Technik bekannt (US 2005/0008345 A1), dem Fernseher eine Konvertierungsschaltung zuzuordnen, die in Abhängigkeit der Auflösung der am digitalen Dateneingang der Schaltung anliegenden Daten eine Anpassung der Auflösung dieser Daten an die spezifische Auflösung der Bilddaten der Anzeige vornimmt. Damit kann insbesondere der Anschluß von Geräten mit einem HDMI Ausgang gewährleistet werden, so daß hochauflösende Anzeigedaten auf der Anzeige des Fernsehgerätes dargestellt werden können. Da jedoch im Fernsehgerät auch Mittel mit anderen Anzeigedaten vorgesehen sind, müssen aufwendige Schaltungen vorgesehen werden, um aus den unterschiedlichen Anzeigedaten eine anzuzeigende auswählen zu können, ohne daß mit Qualitätsproblemen in der Darstellung gerechnet werden muß. Hinzu kommt, daß durch solche Schaltungen die Umschaltzeit zwischen den Anzeigedaten nachteilig beeinflußt wird, was einer Benutzerfreundlichkeit derartiger Geräte schadet. Erschwerend kommt hinzu, daß für verschiedene Empfangsformate unterschiedliche Sendetuner bestehen, sei es nun aufgrund eines analogen und/oder digitalen Fernsehempfangs, so daß solche Sendetuner selbst aufwendige Konvertierungsschaltungen aufweisen, womit bekannte Fernsehgeräte vergleichsweise konstruktiv aufwendig, bedienungsunfreundlich und kostenintensiv sind.

Die Erfindung hat sich daher die Aufgabe gestellt, einen Fernseher der eingangs geschilderten Art derart zu verbessern, daß auf konstruktiv einfache Weise auf einem Fernsehgerät verschiedenste digitale Anzeigedaten in frei wählbarer Auflösung auf einer Anzeige mit einer spezifischen bzw. vorbestimmten Auflösung angezeigt werden können, ohne daß damit die Bedienungsfreundlichkeit des Fernsehers beeinträchtigt wird. Außerdem sollen auf einfache Weise Bildstörungen in der Darstellung der Anzeigedaten vermieden werden.

Die Erfindung löst die gestellte Aufgabe dadurch, daß das von der Recheneinheit programmgesteuerte Empfangsteil über die digitale Schnittstelle der Recheneinheit mit dem digitalen Dateneingang der Konvertierungsschaltung verbunden ist, wobei die Konvertierungsschaltung gegenüber der Recheneinheit und dem über die digitale Schnittstelle verbundenen Empfangsteil auf einer gesonderten Baueinheit im Gehäuse vorgesehenen ist.

Ist das von der Recheneinheit programmgesteuerte Empfangsteil über die digitale Schnittstelle der Recheneinheit mit dem digitalen Dateneingang der Konvertierungsschaltung verbunden, so können deren Anzeigedaten über die Programmierung der Recheneinheit derart angepaßt werden, daß eine Übertragung dieser Daten über eine gemeinsame digitale Schnittstelle möglich wird. Weist nun auch die Konvertierungsschaltung dafür einen zweiten digitalen Dateneingang auf, so kann dieser Dateneingang zum Empfang von Anzeigedaten der digitalen Schnittstelle genützt werden, um so nur mit einer Konvertierungsschaltung verschiedene Anzeigedaten in ihrer Auflösung an die spezielle Auflösung der Bilddaten der Anzeige anzupassen. Insbesondere zeichnet sich diese Lösung dann aus, wenn zumindest zwei Empfangsteile im Fernsehgerät vorgesehen sind, beispielsweise je einen Sendetuner für einen digitalen und einen analogen Fernsehempfang. Außerdem können mit einem programmgesteuerten Empfangsteil Bildstörungen beim Umschalten zwischen den Anzeigedaten vermieden werden. So kann, je nachdem ob die Anzeige Anzeigedaten vom Empfangsteil oder vom digitalen Signaleingang darstellen soll, die digitale Schnittstelle von der Recheneinheit stillgelegt werden. Es wird somit nur eine Konvertierungsschaltung benötigt, ohne daß dafür aufwendige Schaltungen zum Auswählen zwischen Anzeigedaten vorsehen werden müssen. Insbesondere können auch Bildstörungen vermieden werden, wenn Konvertierungsschaltung gegenüber der Recheneinheit und dem über die digitale Schnittstelle verbundenen Empfangsteil auf einer gesonderten Baueinheit im Gehäuse vorgesehenen ist, wobei in diesem Fall der Ausgang der Konvertierungsschaltung digital mit dem Eingang der Anzeige verbunden werden muß. Damit kann eine Konvertierungsschaltung im Gehäuse so angeordnet werden, daß eventuelle Störeinflüsse von anderen Bauteilen des Fernsehgeräts, insbesondere Netzteilen oder Computerteilen, insbesondere der Recheneinheit zugehörig, auszuschließen sind, so daß nicht nur erfindungsgemäß ein kostengünstiges Fernsehgerät geschaffen ist, sondern auch eine besonders hohe Standzeit des Geräts gewährleistet werden kann.

Damit eine fehlerfreie kabelgeführte Datenübertragung von der digitalen Schnittstelle der Recheneinheit zur Konvertierungsschaltung sichergestellt werden kann, ist diese digitale Schnittstelle über eine auf der gesonderten Baueinheit vorgesehene Sende- und Empfangseinrichtung mit der Konvertierungseinrichtung verbunden. In anderen Worten, in der Datenverbindung zwischen der digitalen Schnittstelle und der Konvertierungsschaltung ist eine auf der gesonderten Baueinheit vorgesehene Sende- und Empfangseinrichtung vorgesehen. Um den konstruktiven Aufwand der Konvertierungsschaltung zu verringern, ist der Sende- und Empfangseinrichtung eine Schaltung zum Versenden von Kenndaten an die digitale Schnittstelle zugeordnet. Die Konvertierungsschaltung muß daher keine Mittel zur Ermöglichung einer Datenübertragung von der digitalen Schnittstelle der Recheneinheit auf die Anzeige des Fernsehgeräts aufweisen, so daß kostengünstige Serienteile verwendet werden können. Insbesondere kann so die digitale Schnittstelle unter Verwendung einer herkömmlichen Graphikkarte, aufweisend einen DVI Ausgang, erstellt werden, was eine kostengünstige digitale Anzeigeverbindung mit dem Fernsehgerät schafft, ohne mit Qualitätsverlusten in der Übertragung rechnen zu müssen.

Einfache Konstruktionsverhältnisse ergeben sich, wenn eine auf der Baueinheit angeordnete Auswahlschaltung den Bilddaten die entsprechenden Tondaten der Anzeigedaten zur Tonausgabe zuordnet.

Die Betriebssicherheit des Fernsehers kann außerdem dadurch erhöht werden, daß für einen von der Recheneinheit unabhängigen Betrieb der Anzeige auf der Baueinheit ein zweites Empfangsteil angeordnet ist, was bei Ausfall der Recheneinheit dennoch einen Fernsehempfang ermöglicht. Um einfache Konstruktionsverhältnisse zu schaffen, ist die Auswahlschaltung mit dem zweiten digitalen Dateneingang der Konvertierungsschaltung verbunden, wobei die Auswahlschaltung dann zwischen den Anzeigedaten der Recheneinheit und den Anzeigedaten des zweiten Empfangsteils auswählt.

In der Zeichnung ist der Erfindungsgegenstand anhand eines Ausführungsbeispiels beispielsweise dargestellt. Es zeigen
- Fig. 1: eine teilweise aufgerissene Rückansicht auf das erfindungsgemäße Fernsehgerät in einer nicht maßstabgetreuen Darstellung und

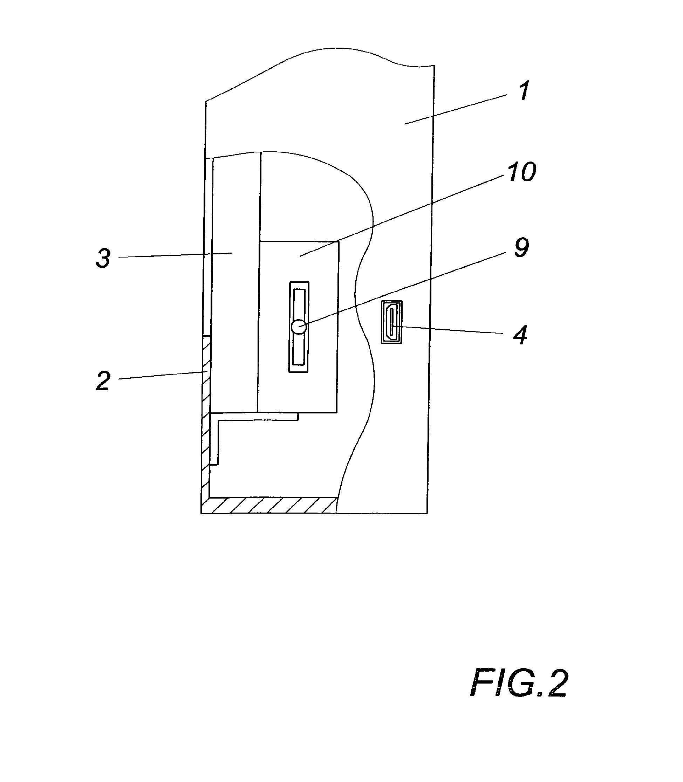

- Fig. 2: eine teilweise aufgerissene Darstellung einer vergrößerten Seitenansicht auf das Fernsehgerät nach Fig. 1.

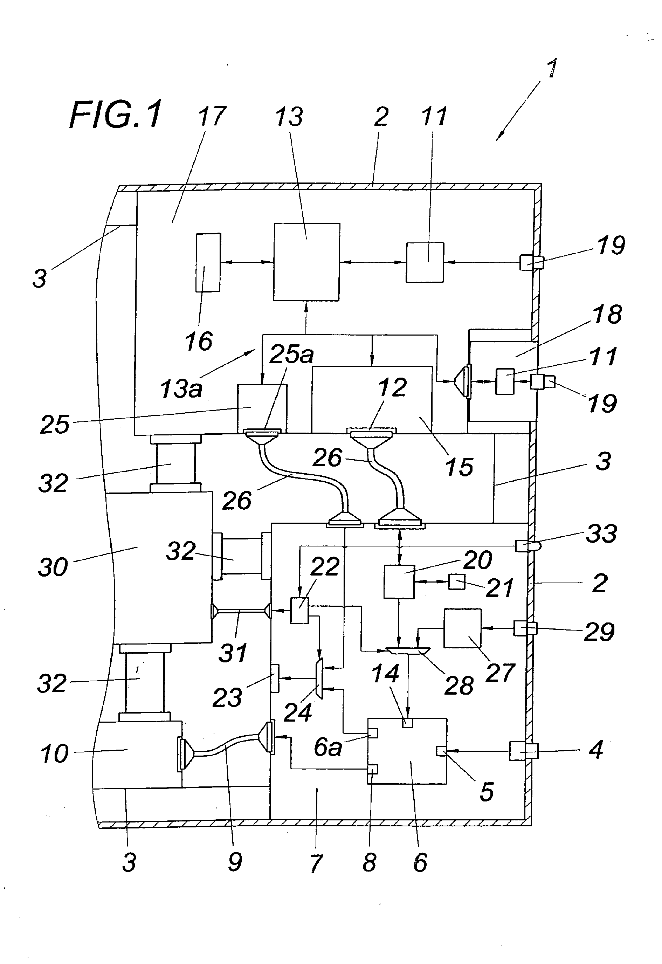

Gemäß Fig. 1 wird in einer rückwärtigen Ansicht ein teilweise aufgerissenes Fernsehgerät 1 mit einer von einem Gehäuse 2 umfaßten Anzeige 3 gezeigt. Die Anzeige 3 ist als LCD-Anzeige ausgeführt, und ist mit digitalen Bilddaten in einer für die Anzeige 3 spezifischen Auflösung ansteuerbar, beispielsweise in einer Auflösung von über die gesamte Anzeigenfläche gleichmäßig 1366 horizontal Mal 768 vertikal verteilten Bildpunkten oder auch 1280*720 Pixel (Bildpunkte), welche Auflösung auch als HDTV 720p bekannt ist. An das Fernsehgerät 1 können andere nicht näher dargestellte Geräte angeschlossen werden, und zwar über einen von außerhalb des Gehäuses 2 zugänglichen, digitalen Signaleingang 4 zum Empfangen von digitalen Anzeigedaten in einer frei wählbaren Auflösung, beispielsweise in einer HDMI typischen Auflösung von 1024 horizontalen Mal 864 vertikalen Bildpunkten. Um die über diesen Signaleingang 4 empfangenen Anzeigedaten auf der Anzeige 3 des Fernsehgeräts 1 darstellen zu können, ist der digitale Signaleingang 4 über einen digitalen Dateneingang 5 einer als Scaler ausgeführten Konvertierungsschaltung 6 mit der Anzeige 3 verbunden. Die Konvertierungsschaltung nimmt in Abhängigkeit der Auflösung der an ihrem Dateneingang 5 anliegenden Daten, eine Anpassung der Auflösung dieser Daten, hier 1024 horizontalen mal 864 vertikalen Bildpunkten, an die spezifische Auflösung der Bilddaten der Anzeige, nämlich auf 1366 horizontale Mal 768 vertikale Bildpunkten, vor. Die Konvertierungsschaltung 6 ist auf einer gesonderten Baueinheit 7 im Gehäuse 2 vorgesehen und ist mit seinem Bilddatenausgang 8 mit der Anzeige 3 zum Beaufschlagen der Anzeige 3 mit Bilddaten in der spezifischen Auflösung der Anzeige 3 verbunden, wobei hiefür ein Bilddatenkabel 9 verwendet wird, das an der Steuerung 10 der Anzeige 3 angeschlossen ist. Der Fernseher weist auch mehrere Empfangsteile 11 auf, insbesondere digitale und/oder analoge Sendetuner für Fernsehprogramme, die mit der Anzeige 3 zum Übertragen ihrer Anzeigedaten verbunden werden können. Erfindungsgemäß verbinden diese Empfangsteile 11 über eine gemeinsame digitale Schnittstelle 12 einer im Gehäuse angeordneten Recheneinheit 13, womit eine hohe Übertragungsqualität gewährleistet werden kann. Um einfache konstruktive Voraussetzungen zu schaffen, ist diese Schnittstelle 12 mit einem zweiten digitalen Dateneingang 14 der Konvertierungsschaltung 6 verbunden. Der Steuerung 10 der Anzeige 3 werden somit nur Bilddaten einer Konvertierungsschaltung 6 übertragen - eine Auswahl unter den anzuzeigenden Bilddaten muß von der Steuerung 10 nicht vorgenommen werden, was einerseits für geringe Umschaltzeiten zwischen den verschiedenen Anzeigedaten sorgt und andererseits Bildstörungen vermeidet. Die digitale Schnittstelle 12 ist als DVI Ausgang einer über einen Bus 13a, insbesondere PCI Bus, an eine Recheneinheit 13 angeschlossenen Graphikkarte 15 ausgeführt, was die Herstellungskosten durch Verwendung von Standardteilen vermindert. Es ist aber auch vorstellbar, anstatt einer Graphikkarte 15 auch andere Bauteile vorzusehen, die digitale Anzeigedaten übertragen können. Die Empfangsteile 11 werden von der Recheneinheit 13 programmgesteuert, wobei hierfür der Recheneinheit 13 ein Programmspeicher 16 zugeordnet ist. Die Empfangsteile 11 können als auf der Hauptplatine 17, insbesondere einem Motherboard eines herkömmlichen Personal Computers oder Laptops, der Recheneinheit 13 oder auch auf einer auswechselbaren Steckkarte 18 angeordnet sein. Die Empfangsteile 11 weisen von außerhalb des Gehäuses 2 zugängliche Empfangseingänge 19 auf, um beispielsweise daran Antennen für einen digitalen und/oder einen anlogen Fernsehempfang anschließen zu können. Erfindungsgemäß eröffnet sich somit die Möglichkeit verschiedene Empfangsteile 11 nur über die LVDS Signale einer digitalen DVI Schnittstelle 12 der Graphikkarte 15 zu übertragen, so daß eine Darstellung der Anzeigedaten der Empfangsteile 11 ohne Qualitätsverlust gewährleistet werden kann. Im Gegensatz zum Stand der Technik werden so die Anzeigedaten der Empfangsteile 11 digital zu einer gemeinsamen Konvertierungsschaltung 6 übertragen, so daß keine digitale zu analoge bzw. anschließend analoge zu digitale Umwandlung der Anzeigedaten notwendig ist. Da auch die Konvertierungsschaltung 6 digital über LVDS Signalleitungen mit der Anzeige 2 verbunden ist, kann eine hohe Störungssicherheit im Signalweg der Anzeigedaten sichergestellt werden.

Die digitale Schnittstelle 12 der Recheneinheit 13 ist über eine auf der gesonderten Baueinheit 7 vorgesehene Sende- und Empfangseinrichtung 20 mit der Konvertierungsschaltung 6 verbunden. Der Sende- und Empfangseinrichtung 20 ist eine Schaltung 21 zugeordnet, die Kenndaten an die digitale Schnittstelle überträgt. Damit können der Recheneinheit 13 bzw. der Graphikkarte 15 auf einfache Weise funktionsrelevanten Daten des Fernsehgeräts, beispielsweise die Auflösung der Anzeige 3, übertragen werden. Ändern sich die Kenndaten des Fernsehgeräts, z.B. durch Verwendung einer anders auflösenden Anzeige 3, beim Zusammenbau dieser Geräte, kann diese Änderung auf einfache Weise mit einer Anpassung der Kenndaten der Schaltung 21 berücksichtigt werden, ohne dafür eine andere Baueinheit 7 zu benötigen. Die gesonderte Baueinheit 7 ist somit vielseitig verwendbar. Außerdem ist es auch möglich, über der Schaltung 21 der Graphikkarte 15 mitzuteilen, daß eine Verarbeitung der gesendeten Anzeigedaten nur zur Anzeige diese auf der Anzeige 3 dienen, so daß eventuelle Kopierschutzmaßnahmen auf konstruktiv einfache Weise im Fernsehgerät 1 vorgesehen werden können. Ist die Schaltung 21 als Micocontroller ausgeführt, so ergeben sich konstruktiv einfache Voraussetzungen.

Auf der Baueinheit 7 ist eine Auswahlschaltung 22 angeordnet, die den Bilddaten die entsprechenden Tondaten der Anzeigedaten zur Tonausgabe zuordnet, welche Tondaten an der Tonschnittstelle 23 der Baueinheit 7 zur Weiterverarbeitung abgegriffen werden können, beispielsweise für einen Verstärker zum Antreiben von Lautsprechern im Fernsehgerät, was aber der Übersichtlichkeit halber nicht näher dargestellt worden ist. Hiezu steuert die Auswahlschaltung 22 einen Tonmultiplexer 24 an, an dessen Eingänge der Tonausgang 6a der Konvertierungsschaltung 6 sowie ein der Recheneinheit 13 zugehöriger Tonausgang 25a angeschlossen ist. Der Tonausgang 25a wird von einer mit der Recheneinheit 13 verbundenen Soundkarte 25 erstellt und führt die zu der über die digitale Schnittstelle 12 übertragenen Anzeigedaten entsprechenden Tondaten, der Tonausgang 6a führt die zu der über den digitalen Signaleingang 4 übertragenen Anzeigedaten entsprechenden Tondaten. Die Soundkarte 25 ist in ähnlicher Weise, wie bei der digitalen Schnittstelle 12, über Kabel 26 mit den Signalleitungen der Baueinheit 7 verbunden.

Für einen von der Recheneinheit 13 unabhängigen Fernsehbetrieb der Anzeige 3 ist auf der Baueinheit 7 ein zweites Empfangsteil 27 angeordnet. Die Auswahlschaltung 22 wählt über einen Bildmultiplexer 28 zwischen den Anzeigedaten der Recheneinheit 13 und den Anzeigedaten des zweiten Empfangsteils 27 diejenigen Anzeigedaten aus, die mit dem zweiten digitalen Dateneingang 14 der Konvertierungsschaltung 6 verbunden werden sollen. Um das zweite Empfangsteil 27 mit einer Antenne verbinden zu können, ist bekanntermaßen ein Anschluß 29 vorgesehen, wobei aber auch eine Verbindung mit den Anschlüssen 9 oder 19 der anderen Empfangsteile 11 bestehen kann.

Die Auswahlschaltung 22 wird auch zum Steuern des Netzteils 30 verwendet, in dem über eine Kabelverbindung 31 die nicht benötigten elektronischen Komponenten des Fernsehgeräts 1 abgeschaltet werden, was das Netzteil 30 beispielsweise über Versorgungsverbindungen 32 durchführen kann.

Zum Empfangen von Steuerbefehlen ist die Auswahlschaltung 22 mit einem Empfänger 33, beispielsweise ein IR Empfänger für Fernsteuerungen, verbunden.

## Patentansprüche

1. Fernsehgerät mit einer von einem Gehäuse umfaßten Anzeige, insbesondere LCD- oder Plasmaanzeige, die mit digitalen Bilddaten in einer für die Anzeige spezifischen Auflösung ansteuerbar ist, mit einem mit der Anzeige verbundenen Empfangsteil, insbesondere einem Sendetuner für Fernsehprogramme, mit einem von außerhalb des Gehäuses zugänglichen digitalen Signaleingang, insbesondere einem HDMI tauglichen Signaleingang, zum Empfangen von digitalen Anzeigedaten, wobei der Signaleingang und das Empfangsteil über je einen digitalen Dateneingang einer Konvertierungsschaltung, insbesondere einem Scaler, mit der Anzeige verbunden sind, welche Konvertierungsschaltung in Abhängigkeit der Auflösung der an ihren Dateneingängen anliegenden Daten eine Anpassung der Auflösung dieser Daten an die spezifische Auflösung der Bilddaten der Anzeige vornimmt, und mit einer im Gehäuse angeordneten Recheneinheit, der eine digitalen Schnittstelle, insbesondere einem DVI Ausgang, zum Anzeigen von digitalen Anzeigedaten der Recheneinheit zugeordnet ist, **dadurch gekennzeichnet, daß** das von der Recheneinheit (13) programmgesteuerte Empfangsteil (11) über die digitale Schnittstelle (12) der Recheneinheit (13) mit dem digitalen Dateneingang (14) der Konvertierungsschaltung (6) verbunden ist, wobei die Konvertierungsschaltung (6) gegenüber der Recheneinheit (13) und dem über die digitale Schnittstelle (12) verbundenen Empfangsteil (11) auf einer gesonderten Baueinheit (7) im Gehäuse (2) vorgesehenen ist.

2. Fernsehgerät nach Anspruch 1, **dadurch gekennzeichnet, daß** in der Datenverbindung zwischen der digitalen Schnittstelle (12) und der Konvertierungsschaltung (6) eine auf der gesonderten Baueinheit (7) vorgesehene Sende- und Empfangseinrichtung (20) vorgesehen ist, wobei der Sende- und Empfangseinrichtung (20) eine Schaltung (21), insbesondere einem Microcontroller, zum Versenden von Kenndaten an die digitale Schnittstelle (12) zugeordnet ist.

3. Fernseher nach Anspruch 1 oder 2, **dadurch gekennzeichnet, daß** eine auf der Baueinheit (7) angeordnete Auswahlschaltung (22) den Bilddaten die entsprechenden Tondaten der Anzeigedaten zur Tonausgabe zuordnet.

4. Fernsehgerät nach Anspruch 3, **dadurch gekennzeichnet, daß** für einen von der Recheneinheit (13) unabhängigen Betrieb der Anzeige (3) auf der Baueinheit (7) ein zweites Empfangsteil (27) angeordnet ist und daß die mit dem zweiten digitalen Dateneingang (14) der Konvertierungsschaltung (6) verbundene Auswahlschaltung (22) zwischen den Anzeigedaten der Recheneinheit (13) und den Daten des zweiten Empfangsteils (27) auswählt.
